**Europäisches Patentamt**

**European Patent Office**

**Office européen des brevets**

(11) Veröffentlichungsnummer: **0 049 212**
A1

## EUROPÄISCHE PATENTANMELDUNG

(21) Anmeldenummer: 81730087.4

(22) Anmeldetag: 01.09.81

(51) Int. Cl.³: **H 04 M 3/62,** H 04 Q 3/00

(30) Priorität: 30.09.80 DE 3037364

(71) Anmelder: **SIEMENS AKTIENGESELLSCHAFT Berlin und München, Postfach 22 02 61, D-8000 München 22 (DE)**

(43) Veröffentlichungstag der Anmeldung: **07.04.82 Patentblatt 82/14**

(72) Erfinder: **Achmüller, Andreas, Ing. grad., Oberstdorferstrasse 12, D-8000 München 71 (DE)**
Erfinder: **Scholz, Dieter, Weilbachstrasse 12, D-8061 Prittlbach (DE)**

(84) Benannte Vertragsstaaten: **AT BE CH FR GB IT LI NL SE**

(54) Schaltungsanordnung für zentralgesteuerte Fernsprechanlagen, insbesondere Fernsprechnebenstellenanlagen und private Fernsprechsonderanlagen, mit digital gesteuerten Vermittlungsplätzen.

(57) Die Erfindung betrifft eine Schaltungsanordnung für zentralgesteuerte Fernsprechanlagen, insbesondere Fernsprechnebenstellenanlagen und private Fernsprechsonderanlagen, mit zumindest einem Tasten und optische Anzeigemittel aufweisenden Vermittlungsplatz. Die anzusteuernden optischen Anzeigemittel (L1, LX) sind je über eine Anschalte- und Treibermittel enthaltende Baugruppe (DAA1, DAAX) und die Tasten (DA1, DAX) über eine sämtlichen Tasten gemeinsam zugeordnete, die Zustandsänderungen der Tasten überwachende Abtasteinrichtung verbunden, wobei die Baugruppen (DAA1, DAAX) und die Abtasteinrichtung (SCN) über eine gemeinsame Datenverbindungsleitung (DL) mit der Informationsauswerteeinrichtung (MC) in Verbindung stehen.

Derartige Schaltungsanordnungen werden insbesondere für Flugsicherungsanlagen eingesetzt.

0049212

SIEMENS AKTIENGESELLSCHAFT
Berlin und München

Unser Zeichen
VPA 80 P 6422 DE

Schaltungsanordnung für zentralgesteuerte Fernsprechanlagen, insbesondere Fernsprechnebenstellenanlagen und private Fernsprechsonderanlagen, mit digital gesteuerten Vermittlungsplätzen

Die Erfindung betrifft eine Schaltungsanordnung für zentralgesteuerte Fernsprechanlagen, insbesondere Fernsprechnebenstellenanlagen und private Fernsprechsonderanlagen, mit zumindest einem Tasten und optischer Anzeigemittel aufweisenden Vermittlungsplatz, der über eine Verbindungsleitung mit den digitalen Informationen empfangenden und sendenden zentralen bzw. dezentralen Einrichtungen verbunden ist und dem für die Umsetzung von digital zu empfangenden und zu sendenden Informationen entsprechende Codeumsetzer und für den Empfang und das Senden von Informationen Speicher- und Auswertemittel zugeordnet sind.

Derart definierte Fernsprechanlagen sind vielfach für private Fernsprechsondernetze vorgesehen, bei denen die Teilnehmereinrichtungen neben ihrer Funktion als in ankommender und abgehender Verkehrsrichtung betriebene Fernsprecheinrichtungen zusätzlich vermittlungstechnische Aufgaben erfüllen müssen. Diese Vermittlungsplätze können beispielsweise Wartungsplätze von Energieversorgungsunternehmen oder auch Vermittlungs- und Arbeitsplätze von Flugsicherungsanlagen sein. Je nach Struktur und Erfordernis einer derartigen Fernsprechanlage weisen die Vermittlungsplätze eine Vielzahl von Tasten und optischen Anzeigemitteln auf, mit denen einerseits die gewünschten Funktionen manuell steuerbar sind, und andererseits die Betriebszustände innerhalb der Fernsprechanlage an den Vermittlungsplätzen optisch kenntlich gemacht werden kann.

Bei größeren Fernsprechanlagen und dementsprechend umfangreich ausgestalteten Vermittlungsplätzen ist ein erheblicher Aufwand im Hinblick auf die Verkabelung von Tasten und optischen Anzeigemitteln mit den entsprechenden Schalteinrichtungen der Fernsprechanlagen vorzusehen. Dies gilt umso mehr, je unterschiedlicher die einzuleitenden Funktionen gesteuert werden und je mehr Verbindungsleitungen dem Zugriff der einzelnen Vermittlungsplätze unterliegen.

Die der Erfindung zugrunde liegende Aufgabe besteht darin, die Steuerungsmechanismen zwischen den zentralgesteuerten Fernsprechanlagen und den entsprechend angeschalteten Vermittlungsplätzen im Hinblick auf die geschilderten Nachteile zu vereinfachen und darüber hinaus die Funktionsabläufe ungeachtet der aktiven Auslösung durch Tasten bzw. der passiven Steuerung von Anzeigemitteln zu vereinheitlichen. Erfindungsgemäß wird dies dadurch erreicht, daß alle anzusteuernden optischen Anzeigemittel über je eine Anschalte- und Treibermittel enthaltene Baugruppe und alle Tasten über eine sämtliche Tasten gemeinsam zugeordnete, die Zustandsänderung der Tasten überwachende Abtasteinrichtung mit einer den optischen Anzeigemitteln und Tasten gemeinsamen Datenverbindungsleitung verbunden sind und daß die Datenverbindungsleitung mit einer die Ansteuerung der optischen Anzeigemittel und die Auswertung der Tastenfunktionen bewirkende Informationsauswerteeinrichtung in Verbindung steht.

Als wesentlich für die Erfindung ist anzusehen, daß für die Ansteuerung der optischen Anzeigemittel und der Auswertung der Tastenfunktionen eine einzige Datenverbindungsleitung zwischen der Informationsauswerteeinrichtung der Fernsprechanlage und den Tasten und optischen Anzeigemitteln der Vermittlungsplätze vorgesehen ist. Unter der Voraussetzung, daß die die Anschalte- und Treibermittel enthaltende Baugruppe für die jeweiligen optischen Anzeigemittel und die Zustandsänderungen der Tasten überwachende Abtasteinrichtung konstruktiv innerhalb der Vermittlungsplätze untergebracht wird, so bedeutet dies, daß zwischen der Informationsauswerteeinrichtung der Fernsprechanlage und dem jeweiligen angeschalteten Vermittlungsplatz eine einzige Datenverbindungsleitung aufzuwenden ist, um sämtliche aktiven und passiven Steuerungsvorgänge zwischen den Vermittlungsplätzen und den Fernsprechanlagen zu steuern.

Gemäß einer vorteilhaften Ausgestaltung der Erfindung ist vorgesehen, daß eine bestimmte Anzahl der optischen Anzeigemittel und Tasten als Modul zusammengefaßt ist und daß die optischen Anzeigemittel und Tasten innerhalb des Moduls für beliebig zu empfangene und zu sendene Informationen einsetzbar sind. Mit dieser Maßnahme ist erreicht, daß die Vermittlungsplätze durch das Vorhandensein der universell verwendbaren Module jederzeit ohne Aufwnand sowohl vergrößert als auch verkleinert werden können. Ein besonderer Vorteil ergibt sich daraus, daß die Module der Vermittlungsplätze untereinander kompertibel sind.

Eine weitere vorteilhafte Ausgestaltung der Erfindung sieht vor, daß das Modul aus in der Zuordnung frei wählbaren Funktionstasten und Anzeigemittel sowie aus einer die Anzeigemittel auf Funktion prüfende Testtaste gebildet ist. Mit dem Vorhandensein der Testtaste ist es der Bedienungsperson des Vermittlungsplatzes jederzeit möglich, die Funktionsfähigkeit der optischen Anzeigemittel innerhalb des Moduls auf ihre Funktionstüchtigkeit zu überprüfen.

Eine weitere vorteilhafte Ausgestaltung der Erfindung sieht vor, daß das Modul als Steckbaugruppe innerhalb des Vermittlungsplatzes einsetzbar ist, so daß im Störungsfall innerhalb kürzester Zeit ein schadhaftes Modul durch ein funktionsfähiges ersetzt werden kann.

Der Erfindung wird in einem figürlich dargestellten Ausführungsbeispiel näher erläutert, indem lediglich die zum Verständnis notwendigen Schalteinrichtungen dargestellt sind.

Dem Vermittlungsplatz VPL sind die Tasten DA1 bis DAX zugeordnet, deren nicht bezeichnete Lampen mit den entsprechenden Lampentreiberstufen DAA1 bis DAAX verbunden sind. Des weiteren sind die Tasten DA1 bis DAX über eine gemeinsame, nicht bezeichnete Steuerleitung mit der Abtasteinrichtung SCN verbunden, die u. a. den Arbeitsspeicher MU und den veränderbaren Datenspeicher DM aufweist. Die Abtast-Einrichtung SCN sowie auch die Lampentreiberstufen DAA 1 und DAAX stehen über eine ebenfalls nicht bezeichnete Verbindungsleitung mit der Informationsverarbeitungseinrichtung MC in Verbindung.

Die Tasten DA1 bis DAX des Vermittlungsplatzes VPL können je nach Bedarf unterschiedlichste Funktionen ausführen. Bei dem Betätigen einer Taste DA1 bzw. DAX durch die Bedienungsperson des Vermittlungsplatzes VPL wird von der Abtast-Einrichtung SCN die Tastenidentitätskennung, beispielsweise in Form einer alpha-numerischen Information, erzeugt und in den Arbeitsspeicher MU und den veränderbaren Datenspeicher DM für die Adressen- und Funktionszuordnung abgespeichert. Von der Informationsverarbeitungseinrichtung MC werden diese Adressen- und Funktionszuordnungen zur Steuerung der entsprechend zu verursachenden Schaltvorgänge herangezogen.

Stellt beispielsweise die Taste DA1 eine dem Vermittlungsplatz VPL zugeordnete Berechtigungsveränderungstaste dar, so wird die Tastenzustandsänderung dieser Taste ebenfalls von der Abtast-Einrichtung SCN erkannt und die Tastenidentitätskennung in Form der Funktionszuordnung und der Adressenzuordnung in den Datenspeicher DM und den Arbeitsspeicher MU übertragen und stehen somit ebenfalls der Informationsverarbeitungseinrichtung MC zur Steuerung der weiteren Schaltvorgänge zur Verfügung.

Des weiteren ist für die Tasten DA1 bis DAX die gemeinsame Testtaste T vorgesehen, die bei Betätigung innerhalb der Fernsprechanlage keine Schaltfunktionen auslöst, sondern die zu einem Modul konstruktiv zusammengefaßten Anzeigemittel - beispielsweise Lampen - durch Anschalten von Versorgungspannung auf Funktionsfähigkeit überwacht.

4 Ansprüche
1 Figur

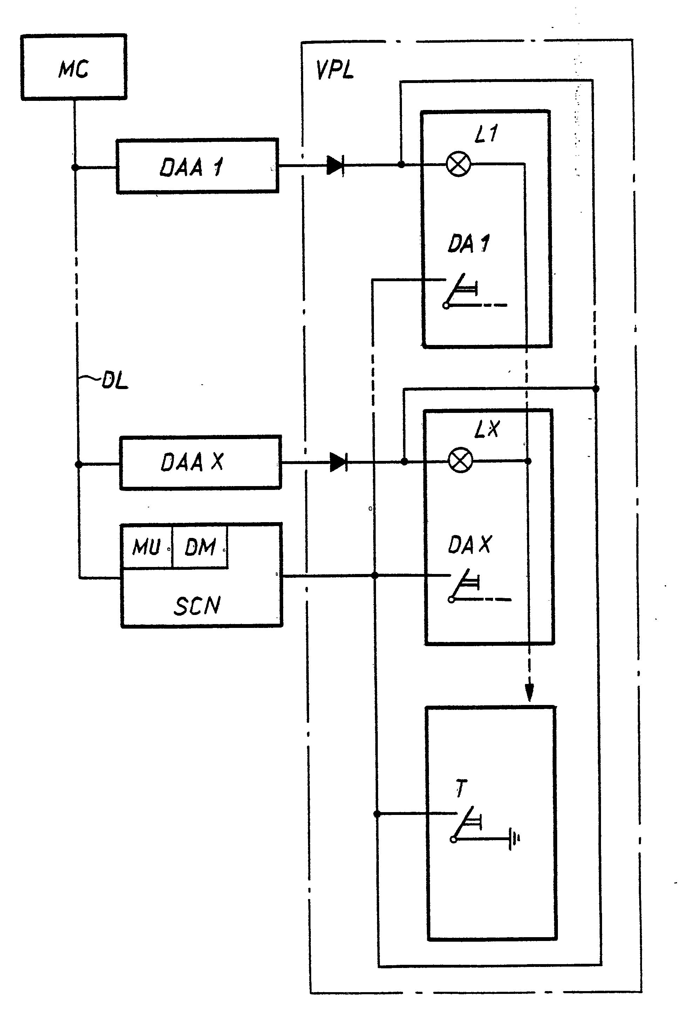

Patentansprüche

1. Schaltungsanordnung für zentralgesteuerte Fernsprechanlagen, insbesondere Fernsprechnebenstellenanlagen und private Fernsprechsonderanlagen, mit zumindest einem Tasten und optische Anzeigemittel aufweisenden Vermittlungsplatz, der über eine Verbindungsleitung mit den digitalen Informationen empfangenden und sendenden zentralen bzw. dezentralen Einrichtungen verbunden ist und dem für die Umsetzung von digital zu empfangenen und zu sendenden Informationen entsprechende Codeumsetzer und für den Empfang und für das Senden von Informationen Speicher und Auswertemittel zugeordnet sind , d a d u r c h   g e k e n n -
z e i c h n e t , daß alle anzusteuernden optischen Anzeigemittel (L1, LX) über je eine Anschalte- und Treibermittel enthaltene Baugruppe (DAA1, DAAX) und alle Tasten (DA1, DAX) über eine sämtlichen Tasten (DA1, DAX) gemeinsam zugeordnete, die Zustandsänderungen der Tasten (DA1, DAX) überwachende Abtasteinrichtung (SCN) mit einer den optischen Anzeigemitteln (L1, LX) und Tasten (DA1, DAX) gemeinsamen Datenverbindungsleitung (DL) verbunden sind und daß die Datenverbindungsleitung (DL) mit einer die Ansteuerung der optischen Anzeigemittel (L1, LX) und die Auswertung der Tastenfunktionen bewirkenden Informationsauswerteeinrichtung (MC) in Verbindung steht.

2. Schaltungsanordnung nach Anspruch 1 , d a d u r c h   g e k e n n z e i c h n e t , daß eine bestimmte Anzahl der optischen Anzeigemittel (L1, LX) und Tasten (DA1, DAX) als Modul zusammengefaßt ist und daß die optischen Anzeigemittel (L1, LX) und Tasten (DA1, DAX) innerhalb des Moduls für beliebig zu empfangene und zu sendende Informationen einsetzbar sind.

Kem 3 Sby / 17.09.1980

0049212

3. Schaltungsanordnung nach den Ansprüchen 1 und 2, d a d u r c h   g e k e n n z e i c h n e t , daß das Modul aus in der Zuordnung frei wählbaren Funktionstasten (DA1, DAX) und Anzeigemittel (L1, LX) sowie aus einer die Anzeigemittel (L1, LX) auf Funktion prüfende Testtaste (T) gebildet ist.

4. Schaltungsanordnung nach den Ansprüchen 1 bis 3, d a d u r c h   g e k e n n z e i c h n e t , daß das Modul als steckbare Baugruppe innerhalb des Vermittlungsplatzes (VPL) mehrfach und untereinander kompentibel einsetzbar ist.

0049212

80 P 6422

80 P 6422

0049212

# EUROPÄISCHER RECHERCHENBERICHT

Nummer der Anmeldung

EP 81 73 0087

## EINSCHLÄGIGE DOKUMENTE

KLASSIFIKATION DER ANMELDUNG (Int. Cl.³)

| Kategorie | Kennzeichnung des Dokuments mit Angabe, soweit erforderlich, der maßgeblichen Teile | betrifft Anspruch |
|---|---|---|
| | DE - A - 2 741 768 (THE POST OFFICE) <br> * Seite 10, Zeile 16 bis Seite 11, Zeile 21; Seite 23, Zeilen 2-31 * <br><br> -- <br><br> ELECTRICAL COMMUNICATION, Band 55, Nr. 1, 1980 <br> New York, US <br> H.D. SIEBEL "Peripheral devices for the unimat 4080 PABX" <br> Seiten 57-62 <br><br> * Seite 61, rechte Spalte, Zeile 24 bis Seite 62, rechte Spalte, Zeile 3 * <br><br> -- <br><br> PROCEEDINGS OF THE IEEE, Band 66, Nr. 2, Februar 1978 <br> New York, US <br> D.K. MELVIN "Microcomputer applications in telephony" <br> Seiten 182-191 <br><br> * Seite 190, linke Spalte, Zeile 16, bis rechte Spalte, Zeile 20 * <br><br> ---- | 1 <br><br><br><br><br><br> 1 <br><br><br><br><br><br><br><br><br><br><br><br> 1 |

H 04 M 3/62
H 04 Q 3/00

RECHERCHIERTE SACHGEBIETE (Int. Cl.³)

H 04 M 3/60
3/62
3/64
H 04 Q

### KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 04-01-1982 | VANDEVENNE |